# EUROPÄISCHE PATENTSCHRIFT

(11) **EP 2 595 475 B1**
(45) Veröffentlichungstag und Bekanntmachung des Hinweises auf die Patenterteilung: **20.09.2017**
(21) Anmeldenummer: 11735863.0
(22) Anmeldetag: 18.07.2011
(51) Int. Cl.: A23C 19/068, A01J 25/12, A01J 25/00

(54) **VERFAHREN ZUR HERSTELLUNG VON LEBENSMITTELPORTIONEN AUSGEHEND VON EINER FASERIGEN, ZÄHFLIEßENDEN LEBENSMITTELMASSE**
METHOD FOR PRODUCING FOOD PORTIONS FROM A FIBROUS, VISCOUS FOOD MASS
PROCÉDÉ POUR PRODUIRE DES PORTIONS ALIMENTAIRES DEPUIS UNE MASSE ALIMENTAIRE FIBREUSE ET VISQUEUSE

(30) Priorität: 22.07.2010 DE 102010031994
(43) Veröffentlichungstag der Anmeldung: 29.05.2013
(73) Patentinhaber: Hochland SE, 88178 Heimenkirch (DE)
(72) Erfinder: KUHN, Dieter, 88167 Grünenbach (DE); MILZ, Oskar, 88178 Heimenkirch (DE); MUELLER, Andreas, 88178 Heimenkirch (DE)
(74) Vertreter: Braun-Dullaeus, Karl-Ulrich
(86) Internationale Anmeldenummer: PCT/EP2011/062244
(87) Internationale Veröffentlichungsnummer: WO 2012/010556

(56) Entgegenhaltungen:
- DE-C2- 2 219 629
- US-A- 2 352 210
- US-A- 3 228 557
- US-A- 5 527 551

## Beschreibung

Die Erfindung betrifft ein Verfahren zur Herstellung von Lebensmittelportionen ausgehend von einer faserigen, zähfließenden Lebensmittelmasse, insbesondere von "Pasta Filata", wie beispielsweise Mozzarella, wobei die Lebensmittelmasse kontinuierlich zunächst in Zufuhrmenge einer Homogenisiervorrichtung aufweisend einen Behälter zugeführt wird, wobei die aus einem Auslassspalt des Behälters austretende Lebensmittelmasse in einem nachfolgendem Schritt einer unterhalb des Behälters angeordneten Form- und/oder Kühlvorrichtung zugeführt wird, die zwischen zwei insbesondere jeweils mit einem Band belegten Walzen einen Einfüllspalt ausbildet und die Lebensmittelmasse zu einem Lebensmittelband formt, wobei der Auslassspalt des Behälters zumindest im wesentlichen parallel zum Einfüllspalt ausgerichtet ist.

Generell sind Verfahren zur Formung eines Endlosbandes einer Lebensmittelmasse aus der Herstellung von Schmelzkäse bekannt. Wie in der DE 103 28 905 A1 gezeigt, wird die heiße Käsemasse über eine Rohrleitung einer Walz- und Kühlvorrichtung zugeführt, in der die Masse zu einem möglichst gleichmäßigem Band geformt wird. Dabei lässt sich die Stärke des Bandes über den Einfüllspalt einstellen. Eine gattungsgemäße Vorrichtung ist auch in der DE 22 19 629 C2 gezeigt, wo die fließfähige Schmelzkäsemasse vermittels eines Speisetrichters in den Einfüllspalt des Walzenpaares gegeben wird. Der Speisetrichter wird seinerseits von einer Schmelzvorrichtung befüllt. Nachfolgend wird das endlose Band in einzelne Streifen geschnitten.

Die US 3,228,557 A offenbart eine Vorrichtung zum kontinuierlichen Zuführen von pulverigem oder granulatartigen Material, mit einem Aufnahmebehälter für das Material. Ein steuerbarer Auslassschieber zur Regelung des kontinuierlichen Ausflusses vom Material ist in einem unteren Bereich des Behälters vorgesehen.

Als wichtiges Qualitätskriterium innerhalb der Fertigung wird die gleichmäßige Ausformung und die Homogenität innerhalb des Bandes und damit des fertigen Produktes angesehen. So wirken sich schon anfängliche Unregelmäßigkeiten ungünstig auf die spätere Oberfläche und damit auf die Qualitätsanmutung des Produktes aus. Die bekannten Verfahren werden ausnahmslos für die Verarbeitung von Schmelzkäse eingesetzt, der im flüssigen Zustand zugeführt und im Rahmen der Verarbeitung gekühlt wird. Bekanntermaßen hat ein solcher Schmelzkäse eine große Homogenität und lässt sich in seiner über die Temperatur beeinflussbare Viskosität verhältnismäßig einfach verarbeiten. Dabei kann die Konsistenz von dem verhältnismäßig fettigen Schmelzkäse mit der eines Rührteiges verglichen werden.

Es hat sich jedoch herausgestellt, dass die bekannten Verfahren nur bedingt geeignet sind, Pasta-Filata-Käse, wie beispielsweise Mozzarella, zu einem homogenen Band zu formen. Ein Pasta-Filata-Käse ist faserig, wässrig und von gummiartiger Konsistenz. Bekanntlich verhält sich eine Pasta-Filata-Masse im erhitzen Zustand nicht wie ein Rührteig, sondern gleicht eher einem Hefeteig, der eine Faserstruktur aufweist und nur eingeschränkt fließfähig ist. Diese Eigenschaften führt auch im erhitzten Zustand zu Problemen mit der Homogenität und damit zu Unregelmäßigkeiten im fertigen Produkt.

Aufgabe der vorliegenden Anmeldung ist es daher, ein verbessertes Verfahren zur Herstellung von Lebensmittelportionen ausgehend von einer faserigen, zähfließenden Lebensmittelmasse, wie Pasta-Filata insbesondere von Mozzarella, vorzuschlagen

Diese Aufgabe wird durch ein Verfahren mit den Merkmalen des Anspruchs 1 und eine Verwendung eines Systems mit den Merkmalen des Anspruchs 5 gelöst. Vorteilhafte Ausführungsformen sind in den jeweiligen Unteransprüchen genannt.

Der wesentliche Grundgedanke der Erfindung besteht darin, der speziellen Lebensmittelmasse während des kontinuierlich laufenden Betriebes die Möglichkeit Homogenisierung zu geben, so dass sich gerade im Falle der Pasta-Filata-Masse die Fasern vor der Formung des Bandes gleichmäßig in Verarbeitungsrichtung ausrichten. Hierzu wird der Formung des Bandes ein Homogenisierungsbehälter vorgeschaltet, aus dessen Auslassspalt die Lebensmittelmasse in einem vorgeformten Band auf den zwischen den Walzen geformten Einfüllspalt geleitet wird. Dazu wird die Öffnungsweite des Auslassspaltes und/oder die in den Homogenisierungsbehälter gelangende Zufuhrmenge derart eingestellt, dass sich die im Behälter befindliche Lebensmittelmasse zum Zwecke der Homogenisierung in dem Sinne setzen kann, dass sich die meist wurstartige Form der zugeführten Lebensmittelmasse auflöst und zu einem homogenen Lebensmittelbrei wird. In diesem können sich insbesondere am Boden die Fasern ausrichten, so dass die Fasern der aus dem Auslassspalt abgezogenen Lebensmittelmasse im Wesentlichen in Verarbeitungsrichtung ausgerichtet sind. Mit einer solchen Homogenisierung mit Behälter kann gewährleistet werden, dass sich immer die dazu notwendige Menge im Behälter befindet. Die Lebensmittelmasse bewegt sich während der Verarbeitung langsam in Richtung der Auslassspaltes und kann dabei die Faserstruktur in Fließrichtung ausrichten.

Die so erreichte gleichmäßige Faserstruktur der Lebensmittelmasse ist von großem Vorteil bei der weiteren Bearbeitung der Pasta-Filata-Masse. Schließlich wird die längsgerichtete Faserstruktur bei der Bandformung und Abkühlung beibehalten, so dass das spätere Schneiden des Produktbandes in kleine Würfel oder "Sticks" definiert entlang der Faser und/oder quer dazu erfolgen kann. Mit entsprechend konzipierten Schneidvorrichtungen können saubere Schnitte erreicht werden, so dass ein hochwertiges Endprodukt entsteht.

Ein diesbezüglich wesentlicher Grundgedanke liegt darin, den Zulauf der nur eingeschränkt fließfähigen Lebensmittelmasse in den Einfüllspalt zu regeln. Eine solche Regelung erlaubt es, die Menge der sich im Einfüllspalt befindlichen Lebensmittelmasse in einem definierten Bereich zu halten. Die Homogenisierungsvorrichtung umfasst dazu einen auf den Einfüllspalt der gegenläufig angetriebenen Walzen ausgerichteten Auslassspalt, dessen Öffnungsweite veränderbar ist. Die Regelung erfolgt über die insbesondere automatische Einstellung des Auslassquerschnitts des Auslassspaltes. Zur Regelung wird mindestens ein Betriebsparameter des Verfahrens beziehungsweise der Vorrichtung erfasst und herangezogen. Vorzugsweise ist die Breite des Auslassspaltes an die des Einfüllspaltes ("Walzenspalt") angepasst, um ein genaues Vorformen zu erreichen. Vorteilhafterweise wird die Öffnungsweite des Auslassspaltes so eingestellt, dass sich die zugeführte Lebensmittelmasse über die gesamte Breite des Behälters über dem Auslassspalt verteilt.

Die Erfindung trägt dazu bei, dass sich die auf den Walzenspalt aufgetragene Lebensmittelmasse gleichmäßig in den Walzenspalt gelangt und eine geordnete Faserstruktur und -ausrichtung hat. Die Faserausrichtung und Oberflächenstruktur gerade einer Pasta-Filata-Masse wird beim Durchlaufen des Walzenpaares in das sich bildende Band eingeprägt und bleibt auch im weiteren Verarbeitungsprozess erhalten. Dies führt erfindungsgemäß zu einem homogenen fertigen Produkt, was besonders vorteilhaft ist, wenn das Endprodukt in kleinen Streifen oder Würfeln besteht. Diese haben nach der erfindungsgemäßen Verarbeitung glatte Oberflächen und saubere Schnittkanten.

Ein weiterer Vorteil ist, dass ein solcher Homogenisierungsbehälter leicht zu warten und zu reinigen ist. Bei einem Störfall mit stillstehender Produktion lässt sich der große nach oben offene Behälter leicht manuell ausschöpfen und reinigen. Außerdem ist er "CIP-fähig", was die gründliche Reinigung noch weiter vereinfacht.

Darüber hinaus können mit dem Homogenisierungsbehälter auch Produktionsunterbrechungen gepuffert werden, so dass ein Stopp der dem Formungsprozess vorgelagerten Maschinen vermieden werden kann. Vorteilhafterweise sollte das Volumen des Homogenisierungsbehälter darauf ausgelegt sein, eine Produktionsunterbrechung von 5 Minuten puffern zu können. Der Behälter ist dann ausreichend groß, um die üblichen Unterbrechungen auffangen zu können.

Um eine möglichst gute Homogenisierung zu erreichen ist es vorteilhaft, wenn die Temperatur der erhitzten Lebensmittelmasse im Behälter zumindest nahezu konstant gehalten wird. Das kann am einfachsten durch eine gute Isolierung des Behälters erreicht werden, der vorteilhafterweise dickwandig aus Kunststoff gefertigt ist und glatte Innenwände aufweist. Kunststoff hat im Vergleich mit einer metallenen Oberfläche eine verbesserte Isolierwirkung. Dies verringert den Temperaturunterschied zwischen der im Innen- oder im Außenbereich den Behälter durchlaufenden Masse und trägt somit zu einer gleichbleibenden Konsistenz der Masse am Auslassspalt bei. Die Innenwände sind vorteilhafterweise komplett aus Kunststoff gebildet und weisen keine Wärmebrücken nach Außen auf. Innerhalb der Kunststoffwandungen können zum Zwecke einer erhöhten Formstabilität des Behälters metallische Verstärkungen, insbesondere in Form von Edelstahlrohren, vorgesehen sein.

Der Formungsprozess von Mozzarella gelingt am Besten bei einer Temperatur der Masse zwischen 65 und 72°C. Eine gute Isolierung des Homogenisierungsbehälters gewährleistet eine konstante Temperatur der Masse beim Eintritt in den Einlaufspalt und erleichtert damit die Einstellung der Temperatur der Käsemasse.

Zudem ist es vorteilhaft, wenn der Behälter sich in Richtung des Auslassspaltes (auch "Auslassöffnung") verjüngt. Die Lebensmittelmasse wird über die gesamte Querschnittsfläche des Homogenisierungsbehälters kontinuierlich nachgeführt, so dass die Verweilzeit der Masse nicht von ihrer Position im Homogenisierungsbehälter abhängt. Es entstehen somit keine Toträume, in denen sich die Masse absetzen kann, was wiederum auch zur einfachen Reinigung beiträgt. Dabei gewährleistet die Querschnittsverengung des Homogenisierungsbehälters einen gleichmäßigen Durchlauf der Masse sowie deren vollständige Erfassung. Auch die gleichmäßige Verweilzeit der Masse im Behälter unterstützt die Anforderung der konstanten Temperatur, die zu einer gleichbleibenden Konsistenz am Auslassspalt führt. Zur Verbesserung des Fließverhaltens wird der Winkel der beiden Seitenwände vorzugsweise asymmetrisch zur Senkrechten ausgeführt.

Am Auslassspalt tritt somit ein schon vorgeformtes Band aus, dessen Stärke mittels erfasster Betriebsparameter eingestellt werden kann. Die Menge der pro Zeiteinheit austretenden Masse wird vorteilhafter Weise so eingestellt, dass sie der den Walzenspalt in der selben Zeiteinheit durchlaufenden Menge entspricht. Das vorgeformte Band kann dann direkt in den Walzenspalt eingegeben werden. Hier wird er erfasst, zwischen den Walzen fertig geformt und dann der weiteren Verarbeitung zugeführt.

Von Vorteil ist es dabei, wenn die Innenseiten des Homogenisierungsbehälters möglichst glatt gehalten sind. Eventuell an den Innenseiten vorhandene Nähte werden hierzu verschliffen. Die glatte Oberfläche der Innenseiten verhindert eine Produktanhaftungen an den Wänden und die daraus folgenden unterschiedlichen Verweilzeiten der Käsemasse im Homogenisierungsbehälter.

Von besonderem Vorteil ist es, als Betriebsparameter die Menge der sich im Homogenisierungsbehälters befindlichen Lebensmittelmasse heranzuziehen. In dem Homogenisierungsbehälter verändert sich je nach Füllstand der Druck der Lebensmittelmasse auf den Auslassspalt. Ein höherer Füllstand bewirkt einen größeren Druck und damit eine größere Austrittsgeschwindigkeit der Lebensmittelmasse aus dem Auslassspalt. Wird der Füllstand des Homogenisierungsbehälter als Betriebsparameter herangezogen, kann die pro Zeiteinheit aus dem Homogenisierungsbehälter austretende Lebensmittelmasse auch bei einer Änderung des Füllstandes konstant gehalten oder gezielt verändert werden. In einer anderen Ausführungsform wird der Homogenisierungsbehälter zur Erfassung der Menge gewogen. Wird das Gewicht des mit der Masse gefüllten Homogenisierungsbehälters gemessen, kann in bekannter einfacher Weise das Gewicht, respektive die Menge seines Inhalts bestimmt werden.

In einer weiteren besonders bevorzugten Ausführungsform erfasst der Sensor einen Füllstand der Lebensmittelmasse im Einlaufspalt zwischen den Walzen. Das Messen des Füllstands im Einlaufspalt erlaubt, die Menge der aus der Auslassöffnung abgegebene Masse auf die bei der Strangformung im Walzenspalt durchgesetzte Masse abzustimmen. Insbesondere kann ein Gleichgewicht eingestellt werden, bei dem jeweils nur so viel Lebensmittelmasse in den Einlauftrichter gegeben wird, wie gerade den Walzenspalt durchläuft. Dies verhindert sowohl ein Leerlaufen des Einlauftrichters wie auch eine Stauung und die damit einhergehende Faltung der Käsemasse auf dem Walzenspalt.

Vorzugweise werden zur Regelung der Öffnungsweite ein oder mehrere von dem herzustellenden Produkt abhängige Parameter herangezogen. Beispielsweise wird die Stärke des Stranges entsprechend der gewünschte Form des zu fertigenden Produkts gewählt. So erfordert die Produktion von Käse-Scheiben eine andere Strangstärke als die von Käse-Würfeln oder Sticks. Ein weiterer Einflussfaktor und damit relevanter Betriebsparameter ist die gewählte Fördergeschwindigkeit. Beide Parameter bestimmen den Durchsatz an Pasta-Filata-Käse im Walzenspalt und können zur Regelung der Auslassöffnung herangezogen werden.

Ebenso ist es vorteilhaft, die jeweilige Betriebsart zu erfassen und zur Regelung der Öffnungsweite heranzuziehen. Solche Betriebsarten sind neben dem Regelbetrieb beispielsweise das Anfahren, Leerfahren, Stoppen oder Reinigen der Anlage. Je nach Betriebsart kann eine andere Öffnungsweite der Auslassöffnung gewählt werden.

Insbesondere kann die Öffnungsweite des Auslassspaltes und/oder die Zufuhrmenge auf das Kalibrierverfahren einer "Free-Slice" Produktion abgestimmt werden, das beispielsweise in der EP 1 635 630 B1 beschrieben wird.

Statt der hier beschriebenen Strangformung durch gegenläufig angetriebene Walzen können auch gegenläufig angetriebene Bänder zur Formung der Pasta-Filata-Masse eingesetzt werden. Die in dieser Anmeldung für die formenden Walzen beschriebenen Merkmale und Vorteile sind somit auf eine Verwendung von Bändern zur Strangformung übertragbar.

Im Anschluss an die Strangformung wird das Lebensmittelband gekühlt und der Portionierung zugeführt. Die Kühlung erfolgt vorteilhafterweise beidseitig des Bandes mittels Kühlbändern oder Kühlwalzen. Hierbei gilt es zu vermeiden, dass die Oberfläche des Stranges durch ein Anhaften an den produktführenden Oberflächen verletzt wird. Um dies zu verhindern, werden bei bekannten Verfahren Abstreifeinrichtungen eingesetzt, die den Strang am Auslauf lösen, beispielsweise Schaber. Die hierzu erforderliche Berührung der Strangoberfläche kann aber zu Beschädigungen oder Abrieb an der Strangoberfläche führen.

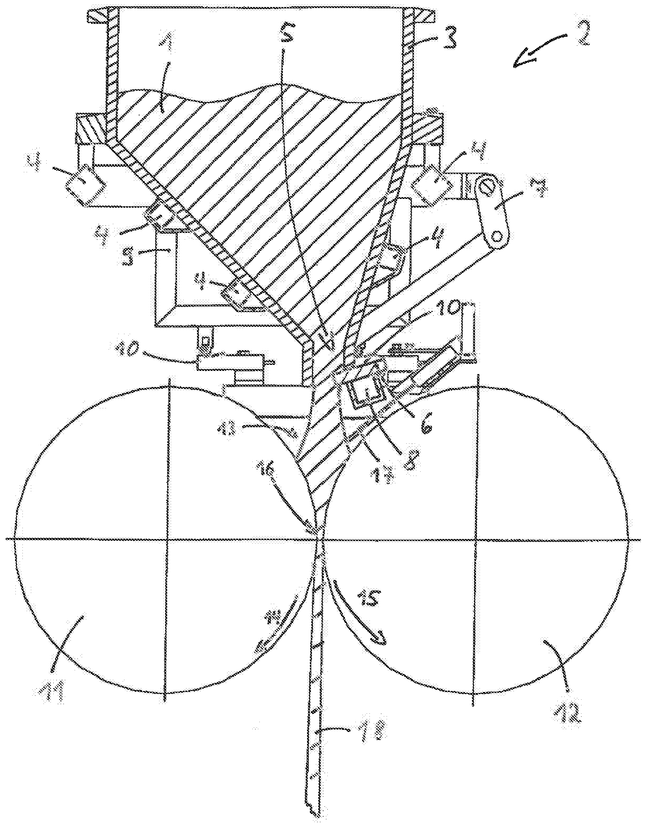

Eine Ausführungsform der Erfindung wird nachfolgend anhand der Figur beschrieben. Die Figur zeigt einen Teilschnitt durch einen mit einer Pasta-Filata-Masse 1 gefüllten Homogenisierungsbehälter 2. Das Volumen des Homogenisierungsbehälters 2 ist auf eine Anlage mit einem Durchsatz von ca. 1800 Kg/h Käsemasse ausgelegt. Um die Produktion 5 Minuten puffern zu können, sollte der Behälter somit ein Fassungsvermögen von 150 Kg haben Der hier gezeigte Homogenisierungsbehälter 2 hat ein Brutto-Volumen von 250I und ist ausreichend dimensioniert.

Die Wände 3 des Homogenisierungsbehälters 2 sind aus Kunststoff gefertigt und werden durch Stahlträger 4 versteift. Dies verhindert eine Verformung des Homogenisierungsbehälters 2 im gefüllten Zustand. Der Homogenisierungsbehälter 2 weist einen rechteckigen Querschnitt auf, der sich im unteren Bereich bezüglich einer Achse verjüngt. Dazu laufen die entsprechende Wände 3 nach unten zusammen, wobei der Neigungswinkel der beiden Wände gegenüber der Senkrechten jeweils unterschiedlich ist.

Der somit bezüglich der einen Achse trichterförmig zulaufende Homogenisierungsbehälter 2 mündet in einem im wesentlichen horizontal ausgerichteten Auslassspalt 5, der von einem Schieber 6 verschlossen ist. Die Pasta-Filata-Masse 1 steht sozusagen auf dem Auslassspalt 5 und wird nur durch den beweglich an dem Auslassspalt 5 gelagerten Schieber 6 an einem Austreten gehindert. Der Schieber 6 ist mit einem stufenlos regelbaren Antrieb 7 verbunden, der den Schieber 6 entlang des Auslassspaltes 5 verschwenkt. Ein außen liegenden Träger 8 verstärkt den Schieber 6. Die so erreichte Verwindungssteifheit des Schiebers 6 gewährleistet auch bei vollständig gefülltem Homogenisierungsbehälter 2 ein exaktes Einstellen der Spaltbreite am Auslassspalt 5.

Der Homogenisierungsbehälter 2 wird in einem Rahmen 9 gehalten, der auf Wiegeelementen 10 aufliegt. Die Sensoren der Wiegeelemente 10 erfassen das Gewicht des Homogenisierungsbehälters 2 und übermitteln es an eine hier nicht gezeigte Regelungseinheit.

Der Auslassspalt 5 des Homogenisierungsbehälters 2 definiert die Breite des Produktbandes und ist auf einen zwischen zwei Walzen 11 und 12 gebildeten Einlaufspalt 13 gerichtet. Die Walzen 11 und 12 sind in den Pfeilrichtungen 14, 15 gegenläufig angetrieben, so dass in den Einlaufspalt 13 eingegebene Pasta-Filata-Masse von den sich drehenden Walzen 11 und 12 erfasst, in den Walzenspalt 16 geführt und dort zu einem Strang geformt wird. Die Ballenbreite der Walzen 11 und 12 und die Breite der Auslassöffnung 5 sind auf einander abgestimmt, so dass der aus der Auslassöffnung 5 austretende Pasta-Filata-Strang über die gesamte Ballenbreite in den Einlaufspalt 13 eingegeben wird. Der Walzenspalt 16 hat in der gezeigten Ausführungsform eine Breite von 1100mm. Die Stärke des austretenden Pasta-Filata-Bandes bestimmt die über den Schieber 6 eingestellte Spaltweite an der Auslassöffnung 5.

Dem Einlauftrichter 13 ist ein Sensor 17 zugeordnet, welcher den Füllstand der eingegebenen Pasta-Filata-Masse misst. Der Sensor 17 ist mit der Regelungseinheit verbunden und übermittelt ihr die erfassten Parameter. Die von den Wiegeelementen 10 und dem Füllstandsensor 17 bestimmten und übermittelten Parameter werden in der Regelungseinheit ausgewertet. Die Regelungseinheit berechnet hieraus Steuersignale, die sie an eine mit dem Antrieb 7 verbundene, ebenfalls nicht gezeigte Steuereinheit sendet. Der Antrieb 7 bewegt den Schieber 6 in entlang der Austrittsöffnung und stellt die gewünschte Spaltbreite des Auslassspaltes ein.

Die Masse verlässt den Walzenspalt 16 als geformtes Band 18 mit definierter Faserstruktur, das der weiteren Verarbeitung, insbesondere einem Längsschneiden und einem nachfolgenden Querschneiden zum Zwecke der Erzeugung von Würfeln oder Sticks zugeführt wird.

## Patentansprüche

1. Verfahren zur Herstellung von Lebensmittelportionen ausgehend von einer faserigen, zähfließenden Lebensmittelmasse (1), insbesondere Pasta Filata, wie beispielsweise Mozzarella, wobei die Lebensmittelmasse (1) kontinuierlich in einer Zufuhrmenge zunächst einer Homogenisiervorrichtung aufweisend einen Behälter (2) mit einem Auslassspalt (5) zugeführt wird, wobei die Öffnungsweite des Auslassspaltes (5) und/oder die Zufuhrmenge derart eingestellt wird, dass sich die im Behälter befindliche Lebensmittelmasse zum Zwecke der Homogenisierung setzen kann, wobei die Fasern der in den Einfüllspalt eintretenden Lebensmittelmasse im Wesentlichen in Verarbeitungsrichtung ausgerichtet werden, wobei die aus dem Auslassspalt des Behälters austretende Lebensmittelmasse (1) in einem nachfolgendem Schritt einer unterhalb des Behälters angeordneten Formvorrichtung zugeführt wird, die zwischen zwei insbesondere jeweils mit einem Band belegten Walzen (11, 12) oder gegenläufig angetrieben Bändern einen Einfüllspalt (13) ausbildet und die Lebensmittelmasse (1) zu einem Lebensmittelband (18) formt, wobei der Auslassspalt des Behälters zumindest im wesentlichen parallel zum Einfüllspalt ausgerichtet ist, wobei in einem nachfolgenden Schritt das Lebensmittelband gekühlt wird, und das Lebensmittelband definiert entlang der Faser und/oder quer zur Faser zu Lebensmittelportionen insbesondere, Würfeln oder Sticks, geschnitten wird.

2. Verfahren nach Anspruch 1,
**dadurch gekennzeichnet,**
**dass** die Öffnungsweite des Auslassspaltes (5) so eingestellt wird, dass sich die zugeführte Lebensmittelmasse (1) über die gesamte Breite des Behälters über dem Auslassspalt verteilt.

3. Verfahren nach Anspruch 1 oder 2,
**dadurch gekennzeichnet,**
**dass** die Temperatur der erhitzten Lebensmittelmasse (1) im Behälter zumindest nahezu konstant gehalten wird.

4. Verfahren nach einem der vorherigen Ansprüche,
**dadurch gekennzeichnet,**
**dass** die Menge der im Behälter befindlichen Lebensmittelmasse (1) zum Zwecke der Zwischenspeicherung derart eingestellt wird, dass der im Zwischenspeicher befindliche Vorrat die Weiterverarbeitung für eine vorgegebene Zeit sicherstellt.

5. Verwendung eines Systems zur Verarbeitung einer zähfließenden Lebensmittelmasse in einem kontinuierlichen Strom, insbesondere zur Umsetzung des Verfahrens nach einem der vorherigen Ansprüche, aufweisend eine Homogenisiervorrichtung mit einem von oben zu befüllenden Behälter (2), wobei der Behälter an seiner Unterseite einen über einen Schieber (6) in seiner Weite regelbaren Auslassspalt (5) aufweist, wobei eine Regel- und Steuereinheit zur Einstellung der Weite des Auslassspaltes vorgesehen ist, wobei mindestens ein Sensor (10, 17) die Menge der sich im Homogenisierungsbehälter (2) befindlichen Lebensmittelmasse (1) erfasst und an die Regel- und Steuereinheit übermittelt, die daraus die Weite des Auslassspaltes ermittelt und einstellt.

6. Verwendung nach Anspruch 5,
**dadurch gekennzeichnet,**
**dass** der Behälter rechteckig ist und sich der Auslassspalt über die gesamte Breite des Behälters erstreckt.

7. Verwendung nach Anspruch 5 oder 6,
**dadurch gekennzeichnet,**
**dass** der Behälter aus Kunststoff gefertigt ist und glatte Innenwände aufweist, wobei die Innenwände durchgehend mit Kunststoff belegt sind.

8. Verwendung nach Anspruch 7,
**dadurch gekennzeichnet,**
**dass** in den Kunststoffwandungen metallische Verstärkungen, insbesondere aus Edelstahl, vorgesehen sind.

9. Verwendung nach einem der Ansprüche 5 bis 8,
**dadurch gekennzeichnet,**
**dass** mindestens ein Sensor eine Waage ist.

## Claims

1. Method for the production of food portions, starting from a fibrous, viscous food mass (1), in particular pasta filata, such as, for example, mozzarella, wherein the food mass (1) is continuously fed in a feed quantity firstly to a homogenization device having a container (2) with an outlet gap (5),
wherein the opening width of the outlet gap (5) and/or the feed quantity is set such that the food mass located in the container can be set for the purpose of homogenization, wherein the fibers of the food mass entering into the filling gap are oriented essentially in the processing direction,
wherein the food mass (1) emerging from the outlet gap of the container is fed in a subsequent step to a shaping device arranged below the container, which configures a filling gap (13) between two rollers (11, 12), in particular each mounted with a belt, or belts driven in opposite directions, and forms the food mass (1) into a food strip (18),
wherein the outlet gap of the container is oriented at least essentially parallel to the filling gap, wherein the food strip is cooled in a subsequent step, and the food strip defined is cut along the fiber and/or transversely to the fiber into food portions, in particular, cubes or sticks.

2. Method according to claim 1,
**characterized in that**
the opening width of the outlet gap (5) is adjusted in such a way that the food mass (1) distributes over the entire width of the container via the outlet gap.

3. Method according to claim 1 or 2,
**characterized in that**
the temperature of the heated food mass (1) in the container is at least kept almost constant.

4. Method according to one of the preceding claims,
**characterized in that**
the quantity of the food mass (1) located in the container is adjusted for the purpose of intermediate storage in such a way that the stock located in the temporary store ensures further processing for a predetermined time.

5. Use of a system for processing a viscous food mass in a continuous stream, in particular for implementing the method according to one of the preceding claims, having a homogenization device with a container (2) to be filled from above,
wherein the container has on its underside an outlet gap (5) which can be regulated in its width via a slide (6), wherein a regulating and control unit for setting the width of the outlet gap is provided,
wherein at least one sensor (10, 17) detects the quantity of the food mass (1) located in the homogenization container (2) and transmits to the regulating and control unit, which determines and adjusts the width of the outlet gap therefrom.

6. Use according to claim 5,
**characterized in that**
the container is rectangular and the outlet gap extends over the entire width of the container.

7. Use according to claim 5 or 6,
**characterized in that**
the container is made of plastic and has smooth inner walls, wherein the inner walls are continuously covered with plastic.

8. Use according to claim 7,
**characterized in that**
metallic reinforcements, in particular made of stainless steel, are provided in the plastic walls.

9. Use according to one of claims 5 to 8,
**characterized in that**
at least one sensor is a scale.

## Revendications

1. Procédé de fabrication de portions d'aliments, à partir d'une masse d'aliment fibreuse, visqueuse (1), notamment une pâte molle filée, comme par exemple de la mozzarella, dans lequel la masse d'aliment (1) est alimentée en continu dans une quantité d'alimentation tout d'abord dans un dispositif d'homogénéisation présentant un récipient (2) avec une fente de sortie (5),
dans lequel la largeur d'ouverture de la fente de sortie (5) et/ou la quantité d'alimentation est réglée de telle sorte que la masse d'aliment se trouvant dans le récipient puisse reposer à des fins d'homogénéisation, dans lequel les fibres de la masse d'aliment entrant dans la fente de remplissage sont alignées essentiellement dans la direction de traitement,
dans lequel la masse d'aliment (1) sortant de la fente de sortie du récipient soit alimentée dans une étape suivante dans un dispositif de façonnage disposé au-dessous du récipient, qui réalise entre deux rouleaux (11, 12), notamment respectivement garnis d'une bande ou des bandes entraînées en sens contraire une fente de remplissage (13) et la masse d'aliment (1) forme une bande d'aliment (18), dans lequel la fente de sortie du récipient est alignée au moins essentiellement parallèlement à la fente de remplissage,
dans lequel dans un étape suivante la bande d'aliment est refroidie, et la bande d'aliment est découpée de manière définie le long de la fibre et/ou transversalement à la fibre par rapport aux portions d'aliment, notamment en cubes ou en bâtonnets.

2. Procédé selon la revendication 1,
**caractérisé en ce que**
la largeur d'ouverture de la fente de sortie (5) est réglée de telle sorte que la masse d'aliment alimentée (1) se répartisse sur la totalité de la largeur du récipient sur la fente de sortie.

3. Procédé selon la revendication 1 ou 2,
**caractérisé en ce que**
la température de la masse d'aliment chauffée (1) est maintenue approximativement constante dans le récipient.

4. Procédé selon une des revendications précédentes, **caractérisé en ce que**
la quantité de la masse d'aliment (1) se trouvant dans le récipient est réglée à des fins de stockage intermédiaire de telle sorte que le stock se trouvant dans le stockage intermédiaire garantie le traitement ultérieur pendant un temps prescrit.

5. Utilisation d'un système pour le traitement d'une masse d'aliment visqueuse dans un flux continu, notamment pour la mise en pratique du procédé selon une des revendications précédentes, présentant un dispositif d'homogénéisation avec un récipient (2) à remplir par le haut,
dans lequel le récipient sur son côté inférieur présente une fente de sortie (5) réglable dans sa largeur par un tiroir (6), dans lequel une unité de commande et régulation pour le réglage de la largeur de la fente de sortie est prévu, dans laquelle au moins un capteur (10, 17) détecte la quantité de la masse d'aliment (1) se trouvant dans le récipient d'homogénéisation (2) et la transmet à l'unité de commande et régulation, qui détermine et règle d'après cela la largeur de la fente de sortie.

6. Utilisation selon la revendication 5,
**caractérisée en ce que**
le récipient est rectangulaire et la fente de sortie s'étend sur la totalité de la largeur du récipient.

7. Utilisation selon la revendication 5 ou 6,
**caractérisée en ce que**
le récipient est fabriqué en plastique et présente des parois intérieures lisses, dans lequel les parois intérieures sont garnies en continu de plastique.

8. Utilisation selon la revendication 7,
**caractérisée en ce que**
dans les parois de plastique des renforcements métalliques, notamment en acier inoxydable, sont prévus.

9. Utilisation selon une des revendications 5 à 8,
**caractérisée en ce**
**qu'**au moins un capteur est une balance.
